# EUROPEAN PATENT SPECIFICATION

(11) **EP 2 808 256 B1**
(45) Date of publication and mention of the grant of the patent: **01.11.2017**
(21) Application number: 14162650.7
(22) Date of filing: 31.03.2014
(51) Int. Cl.: B64D 13/08, B64D 13/06, F28F 9/02, F28F 27/02

(54) **HEAT EXCHANGER BYPASS ARRANGEMENT AND VALVE ASSEMBLY**
WÄRMETAUSCHER-BYPASSANORDNUNG UND VENTILANORDNUNG
AGENCEMENT DE DÉRIVATION D'ÉCHANGEUR DE CHALEUR ET ENSEMBLE DE SOUPAPE

(30) Priority: 29.05.2013 US 201313904613
(43) Date of publication of application: 03.12.2014
(73) Proprietor: Hamilton Sundstrand Corporation, Windsor Locks, CT 06096-1010 (US)
(72) Inventor: Army Jr., Donald E., Enfield, CT 06082 (US); Peacos III, Frederick, North Scituate, RI 02857 (US)
(74) Representative: Hull, James Edward

(56) References cited:
- DE-A1-102007 002 135
- JP-A- 2004 084 959
- US-A- 4 580 406
- US-A- 5 214 935
- US-A1- 2012 138 025

## Description

### BACKGROUND

The present disclosure relates to environmental control systems (ECSs).

ECSs provide a supply of conditioned air to an enclosed space, such as an aircraft cabin and/or cockpit. Conventional ECSs have utilized an air-to-air cycle cooling system in a heat exchange relationship with a liquid loop. The liquid loop typically cools other heat loads such as avionics packages. Interaction between the air and liquid subsystems is relatively complex.

In one conventional system, a flow of air is compressed to a higher pressure and temperature by a cabin air compressor. The compressed air is pre-cooled within a primary air-to-air heat exchanger with heat being rejected to ram air. After being pre-cooled the air is then flowed to a compressor of an air cycle machine (ACM). From the compressor of the ACM, the air is flowed through various additional components before being routed to the cabin and/or cockpit of the aircraft. While this system is generally effective and efficient for providing air to the cabin at a desired temperature, in some operating conditions, such as on colder days, air provided to the cabin by the system may not be provided at a temperature that is high enough to meet desired cabin "pullup" times.

An environmental control system, having the features of the preamble of claim 1 is disclosed in US 5,214,935. A further apparatus for conditioning a fluid is disclosed in US 4,580,406.

### SUMMARY

The present invention provides an environmental control system as recited in claim 1.

### BRIEF DESCRIPTION OF THE DRAWINGS

FIG. 1 is a schematic view of one embodiment of a portion of an environmental control system (ECS).
FIG. 2 is a perspective view of a pack from the ECS of FIG. 1 including a valve assembly mounted to an aft manifold.
FIG. 3A is an enlarged perspective view of an embodiment of the aft manifold and the valve assembly from FIG. 2 with the valve assembly disposed in a first position.
FIG. 3B is an enlarged view of the valve assembly of FIG. 2 from a second perspective with the valve assembly disposed in a second position.
FIG. 4A is an exploded view of the valve assembly of FIG. 2 and a portion of the aft manifold.
FIG. 4B is an exploded view of the valve assembly of FIG. 2 shown in isolation from a second perspective.
FIG. 5A is perspective view of a second embodiment of a valve assembly disposed in a first position.
FIG. 5B is a perspective view of the second embodiment of the valve assembly disposed in a second position.

While the above-identified figures set forth embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the principles of the invention. The figures may not be drawn to scale, and applications and embodiments of the present invention may include features and components not specifically shown in the drawings.

### DETAILED DESCRIPTION

This application describes an environmental control system (ECS) suitable for use in aerospace application with a first flow path extending through a primary heat exchanger and a second flow path that can be selectively opened to allow air flow to bypass the first flow path within the primary heat exchanger. An aft manifold is mounted to the primary heat exchanger and is adapted with a first duct to receive air flow from the primary heat exchanger. The aft manifold has an integrally and monolithically formed bypass duct that is configured to selectively allow air flow to bypass the primary heat exchanger. The bypass arrangement described herein allows warmer air to be provided to the cabin, by selectively blocking air flow through the heat exchanger, thereby avoiding transfer of thermal energy in the heat exchanger. Thus, relatively short cabin "pullup" times can be achieved.

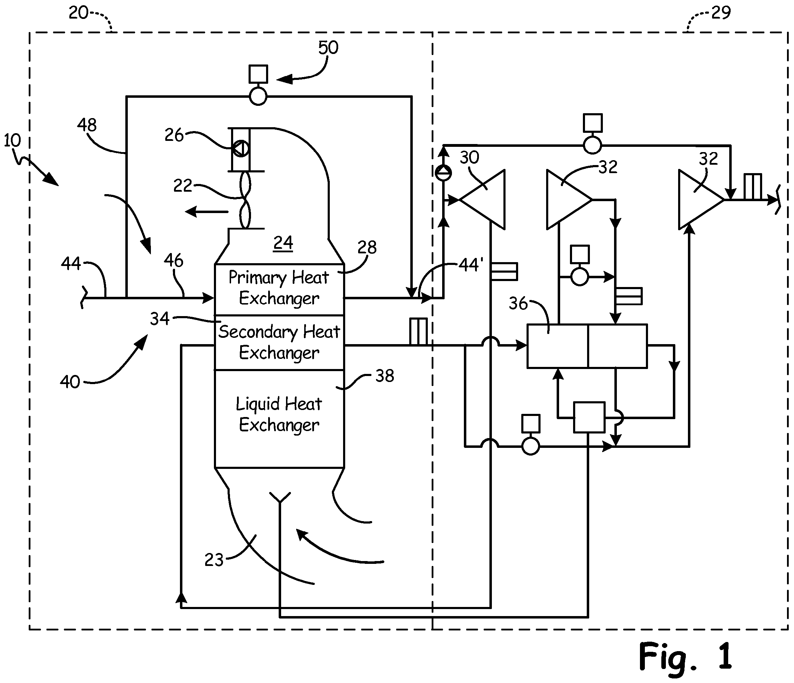

FIG. 1 shows a schematic view of one embodiment of a portion of an ECS 10. In the illustrated embodiment, the ECS 10 includes a ram air duct 20, a fan 22, an inlet 23, an outlet 24, a check valve 26, a primary heat exchanger 28, and an air cycle machine (ACM) 29. The ACM 29 in the illustrated embodiment includes a compressor 30, and first and second turbines 32. Portions of the ACM 29 can be connected by one or more suitable drive shafts (not shown). The ECS 10 in the illustrated embodiment additionally includes a secondary heat exchanger 34, a reheater/condenser 36, and a liquid-to-air heat exchanger 38. Both the primary and secondary heat exchangers 28 and 34 can be air-to-air heat exchangers, and can each be positioned at least partially within the ram air duct 20, in one embodiment It should be understood that the illustrated embodiment of the ECS 10 is provided merely by way of example and not limitation. A variety of alternative configurations are possible in further embodiments, and numerous additional components not specifically show or described can be included with the ECS 10.

Various components of the ECS 10 are interconnected in fluid communication by an air flow circuit 40, which can receive air from and directs air to areas of an aircraft and/or the ambient environment to help provide heating and cooling. For the sake of simplicity, the entire air flow circuit is not shown in FIG. 1. Thus, components such as one or more cabin air compressors are not illustrated.

As shown in FIG. 1, warm air flow (e.g., warm air from a portion of an aircraft) is directed along a combined air flow path 44 toward the primary heat exchanger 28. The combined air flow path 44 is connected to both a first flow path 46 and a second bypass flow path 48. The first flow path 46 extends through the primary heat exchanger 28, in which thermal energy can be removed from the warm air flow to provide a cooling effect. The bypass flow path 48 bypasses the primary heat exchanger 28 to reconnect with a combined air flow path 44' downstream of the primary heat exchanger 28, which allows delivery of at least a portion of the warm air flow downstream of the primary heat exchanger 28 without appreciable loss of thermal energy. The air flow passes along the combined air flow path 44' to the compressor 30 of the ACM 29. Additionally, some portion of the air flow from the combined air flow path 44' can pass through a supply duct (not shown) to a cabin, cockpit or other conditioned space (not shown).

In the embodiment of FIG. 1, the fan 22 is disposed at least partially within the ram air duct 20 adjacent the outlet 24. A cooling air ram is provided by the fan 22 drawing cooling air from the inlet 23 to the outlet 24. The check valve 26 is positioned at least partially within the ram air duct 20 and allows the flow of additional cooling air through the heat exchangers 28 and 34 as necessary. The cooling air and the warm air flows can be separately sourced and isolated as they pass through the ram air duct 20, thereby allowing for controlled heat exchanges between them.

During normal operating conditions the valve assembly 50 can be actuated to a first, closed position such that warm air flow is restricted through the bypass air flow path 48. Some or all of the warm air can pass along the first flow path 46 instead. Cooling air flow driven by the fan 22 acts as a heat sink to help cool the primary heat exchanger 28. In turn, the primary heat exchanger 28 helps cool warm air flow passing through the primary heat exchanger 28 along the first flow path 46. This cooled air flow can then be delivered to the downstream compressor 30 (and conditioned space) via the combined air flow path 44'.

During certain operating conditions (such as on a cold day) where additional heat in the conditioned space is desired, the valve assembly 50 can be actuated to a second, open position such that all or at least a portion of the warm air flow passes along the bypass flow path 48 rather than passing along the first flow path 46 and through the primary heat exchanger 28. Thus, air flow passing along the bypass flow path 48 is not cooled by the primary heat exchanger 28, allowing more thermal energy to be passed downstream by the ECS 10. After bypassing the primary heat exchanger 28, the warm air flow is recombined with any portion of the warm air flow that passes along the first flow path 46. The air flow then travels along the combined flow path 44' downstream to the compressor 30 (and cabin).

The valve assembly 50 is disposed adjacent a junction between the first flow path 46 and the bypass flow path 48 such that the valve assembly 50 can be selectively actuated to regulate air flow along both the first flow path 46 and the bypass flow path 48. Such an arrangement allows a single valve assembly 50 to be used to regulate air flow along both the first flow path 46 and the bypass flow path 48.

In one embodiment, the valve assembly 50 is configured to only partially block air flow along the first flow path 46 in the second position. For example, the valve assembly 50 can be configured to block between about 45 and 85 percent of air flow along the first flow path 46. In yet other embodiments, the valve assembly 50 can selectively block substantially all air flow along the first flow 46 path in the second position. Additionally, the valve assembly 50 blocks substantially all air flow along the bypass flow path 48 when actuated to the first position.

During operation, the secondary heat exchanger 34 can also cool additional warm air flow from the compressor 30, with the additional warm air flow passing through the secondary heat exchanger 34 and then into the reheater/condenser 36. In some embodiments, the ECS 10 can include a recirculation air heat exchanger (not shown), which also receives a flow of air from the conditioned space (e.g., cabin), and passes that air back to the conditioned space.

In the embodiment of FIG. 1, the ECS 10 further includes the liquid-to-air sink heat exchanger 38 positioned at least partially within the ram air duct 20. The liquid-to-air sink heat exchanger 38 receives a cooling fluid, which can be used to cool power electronics and avionics (not shown), and rejects thermal energy to the cooling air passing between the inlet 23 and outlet 24.

Operation of the secondary heat exchanger 34 and the liquid-to-air sink heat exchanger 38 can be largely independent of operation of the primary heat exchanger 28 and the bypass flow path 48.

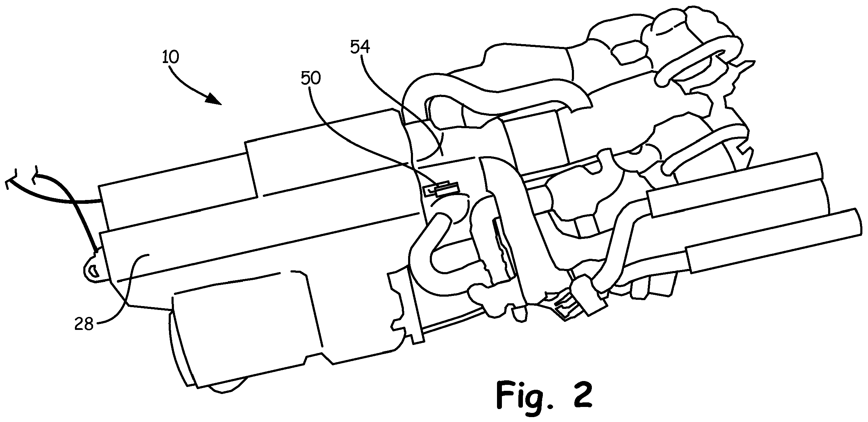

FIG. 2 shows a perspective view of a portion of the ECS 10 from FIG. 1. In FIG. 2, the primary heat exchanger 28 is mounted to an aft manifold 54. As will be discussed subsequently, the aft manifold 54 has a bypass duct that is integrally formed therein and the bypass duct selectively allows air to flow along the bypass flow path 48 (FIG. 1) around the primary heat exchanger 28 as desired. In the embodiment of FIG. 2, the valve assembly 50 is mounted to the aft manifold 54 and selectively regulates air flow along the bypass flow path 48 (FIG. 1). As illustrated, the valve assembly 50 is positioned at a downstream location relative to the first flow path 46 through the primary heat exchanger 28, such that actuation of the valve assembly 50 can restrict warm air flow along the first flow path 46 from exiting the primary heat exchanger 28 to the combined flow path 44'. Moreover, as illustrated, the valve assembly is positioned at a downstream location relative to the bypass flow path 48, such that actuation of the valve assembly 50 can restrict warm air flow from exiting the bypass flow path 48.

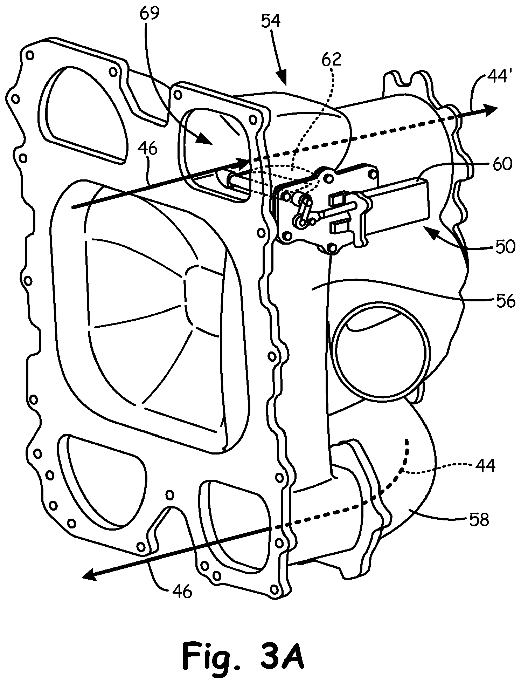

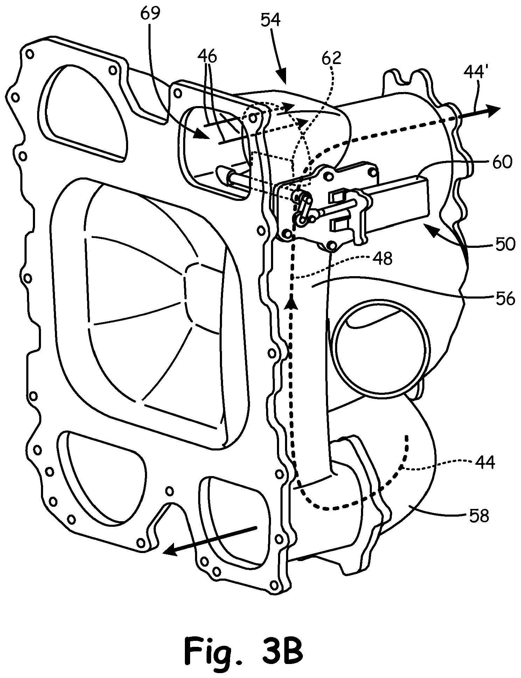

FIGS. 3A and 3B show perspective views of the aft manifold 54 of FIG. 2. In addition to the aft manifold 54 and valve assembly 50, FIGS. 3A and 3B illustrate a bypass duct 56 and a duct 58. The valve assembly 50 can include an actuator 60 and a valve element 62 (shown in phantom). In the illustrated embodiment, the valve element 62 is configured as a flapper valve element. FIG. 3A illustrates the valve assembly 50 in the first position with the combined flow 44 and the first flow 46 passing through the aft manifold 54. FIG. 3B illustrates the valve assembly 50 in the second position with the combined flow 44 and the first flow 46 and additionally the bypass flow 48 passing through the aft manifold 54.

As illustrated in FIGS. 3A and 3B, the bypass duct 56 is integrally and monolithically formed in the aft manifold 54, for example, by casting. In the embodiment shown in FIGS. 3A and 3B, the bypass duct 56 has an inlet portion that communicates with and is disposed between the duct 58 and the primary heat exchanger (shown in FIGS. 1 and 2). The aft manifold 54 has a first duct 69 positioned adjacent the outlet of the primary heat exchanger 28. The first duct 69 selectively communicates with the outlet of the bypass duct 56.

The valve assembly 50 is mounted to the bypass duct 56 adjacent the outlet portion of the bypass duct 56. The actuator 60 is disposed external to the bypass duct 56, while the valve element 62 is housed at least partially within the bypass duct 56 and/or the first duct 69. In the embodiment of FIGS. 3A and 3B, the actuator 60 can rotate the valve element 62 from the first, closed position to the second, open position. In FIG. 3A, the valve element 62 is illustrated in the first, closed position blocking substantially all flow through the bypass duct 56 and thereby directing substantially all of the warm air flow from the combined flow path 44 along the first flow path 46, through the primary heat exchanger 28 and through the first duct 69 back into the aft manifold 54.

If desired, the flapper valve 62 can be actuated to the second position. FIG. 3B illustrates the valve element 62 in the second, open position blocking a portion of the first flow path 46 exiting the primary heat exchanger 28 and allowing warm air flow to follow the bypass flow path 48 through the bypass duct 56. In the embodiment shown in FIG. 3B, the valve element 62 only partially restricts the first flow 46, thus some amount (e.g., approximately 15-55%) of the warm air flow travels along the first flow path 46 as is cooled by the primary heat exchanger 28 before passing through the first duct 69 to the aft manifold 54. Additionally, when the flapper valve 62 is in the second position, a portion of the combined flow 44 forming the bypass flow 48 passes through the bypass duct 56 to the aft manifold 54. Warm air traveling along the bypass flow path 48 does not pass through the primary heat exchanger 28, and therefore thermal energy is not removed by the primary heat exchanger 28, but rather is directed through the aft manifold 54. In the embodiment shown in FIG. 3B, the bypass flow path 48 is recombined with the first flow path 46 on the combined flow path 44' at a junction adjacent the valve assembly 50. In other embodiments, the bypass duct 56 and the flapper valve 62 can be configured to totally block the first flow path 46 such that the first flow path 46 does not pass any air flow from the primary heat exchanger 28 onward through the aft manifold 54. Thus, in this alternate configuration the downstream combined flow path 44' is supplied entirely with warm air flow from the bypass flow 48, which has not been cooled in the primary heat exchanger 28, and the ACM 29 (FIG. 1) and conditioned space are fed substantially entirely by warm air flows from the bypass flow path 48.

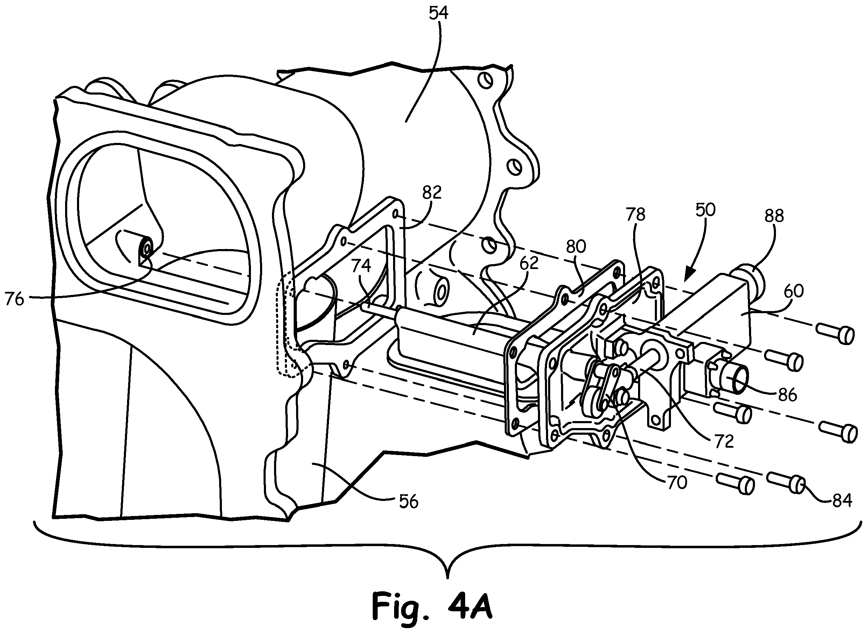

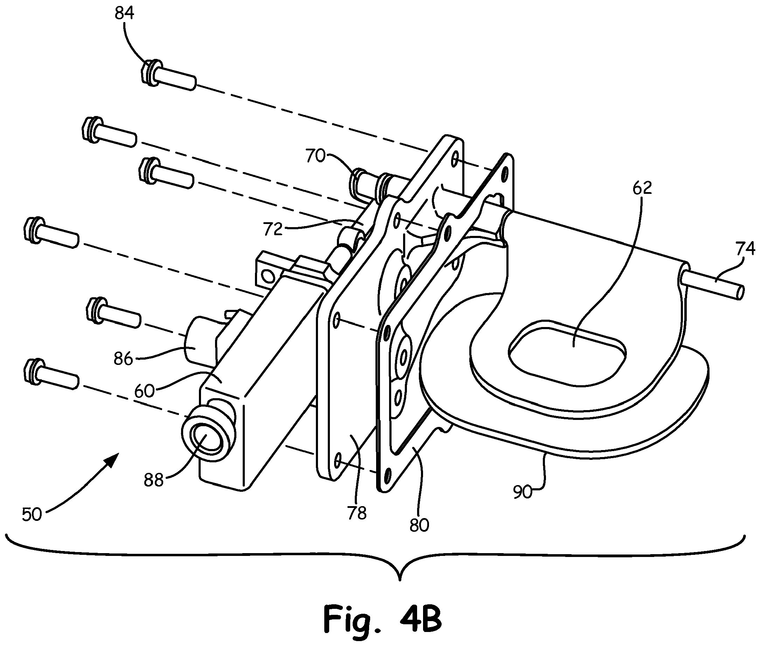

FIG. 4A shows an enlarged portion of the aft manifold 54 with the valve assembly 50 exploded to better illustrate various components. FIG. 4B is another exploded view showing the valve assembly 50 in isolation. In addition to the actuator 60 and the valve element 62, the illustrated embodiment of the valve assembly 50 includes a crank arm 70, a linkage 72, a shaft 74, a bushing 76, a mounting plate 78, a first gasket 80, an embossment 82, fasteners 84, an electrical connector 86, and a manual wrenching feature 88.

As shown in the embodiment of FIGS. 4A and 4B, the actuator 60 comprises a linear actuator with the crank arm 70 extending therefrom. The crank arm 70 can be connected to the linkage 72, which in turn can be coupled to the shaft 74. The shaft 74 can extend from the linkage 72 and can be received in the bushing 76. The bushing 76 can be disposed within or adjacent the bypass duct 56. The shaft 74 can extend through the mounting plate 78 and can be received in a second bushing (not shown) disposed within the mounting plate 78. At least the valve element 62 and the shaft 74 are installable and removable through a wall of the aft manifold 54, which can facilitate assembly as well as later maintenance.

The actuator 60 can be connected to an exterior facing side of the mounting plate 78. The first gasket 80 can be disposed between and interface with both an interior facing side of the mounting plate 78 and the embossment 82 to form a seal. When assembled, the fasteners 84 are received in apertures in the embossment 82 to secure the mounting plate 78 to the aft manifold 54. As shown in FIGS. 4A and 4B, the actuator 60 includes the electrical connector 86 and the manual wrenching feature 88. Manual wrenching feature 88 allows valve element 62 to be manually repositioned in case of a failure of the actuator 60. FIG. 4B additionally illustrates a second gasket 90 disposed along one surface of the valve element 62. The second gasket 90 can be adapted to form a seal along the bypass duct 56.

In operation, the crank arm 70 can be driven linearly to pivot the linkage 72, which in turn can rotate the shaft 74. The rotation of the shaft 74 causes movement of the valve element 62 within the aft manifold 54 to regulate bypass air flow 48 as well as air flow from the primary compressor 28 along the first flow path 46.

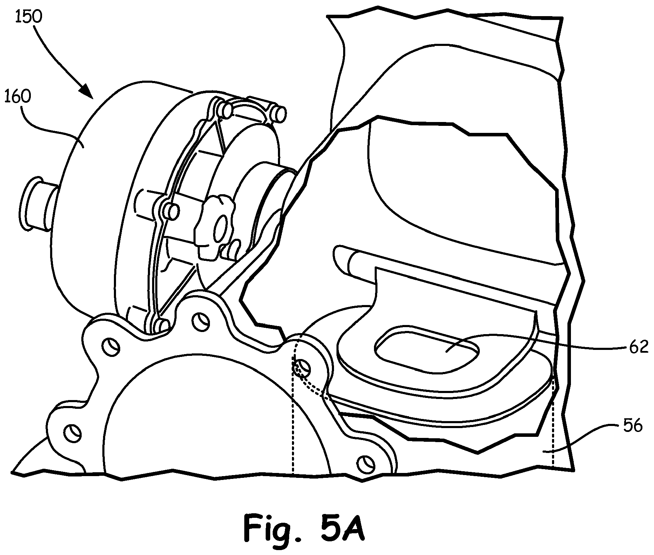

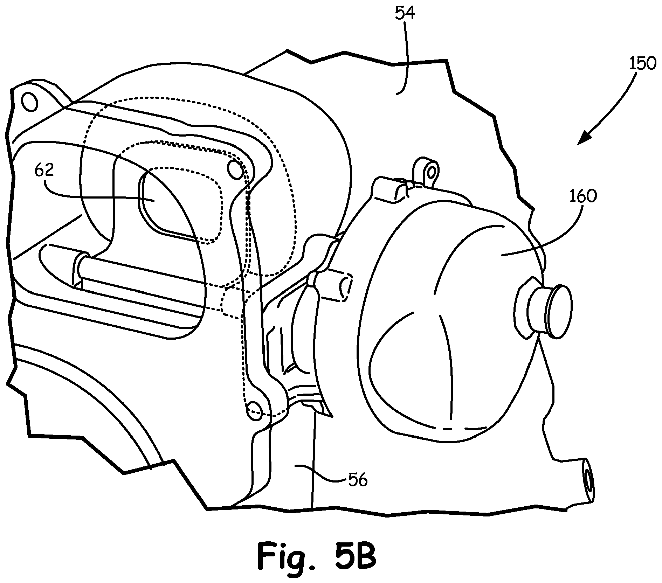

FIGS. 5A and 5B show another embodiment of a valve assembly 150 utilizing a rotary actuator 160 instead of the linear actuator 60. Many of the functions and features of the valve assembly 150 can be similar to those described with respect to the valve assembly 50, except that the rotary actuator 160 in the illustrated embodiment is adapted to directly drive the shaft 74 (see FIGS. 4A and 4B) to turn the flapper valve 62 to a desired position within the aft manifold 54.

It should be recognized that a variety of valve types and configurations can be utilized in further embodiments, as desired for particular applications.

In view of the entire present disclosure, persons of ordinary skill in the art will appreciate that the present invention provides numerous advantages and benefits over the prior art.

## Claims

1. An environmental control system (10) comprising:
a ram air duct (20);
an air cycle machine (29) having a compressor (30) and a turbine (32);
an air-to-air heat exchanger (28) positioned at least partially in the ram air duct (20);
a first flow path (46) extending through the heat exchanger (28) and communicating with the compressor (30);
a second flow path (48) configured to be selectively opened to allow air flow to bypass the first flow path (46) and to communicate with the compressor (30); and **characterised by** a manifold (54) mounted to the heat exchanger (28), wherein the second flow path (48) is integrated into the manifold (54),
a valve assembly (50) disposed adjacent a junction between the first flow path (46) and the second flow path (48), such that the valve assembly (50) can be selectively actuated to regulate air flow along the first flow path (46) and the second flow path (48), wherein the valve assembly (50) is arranged to partially block or block substantially all air flow along the first flow path (46) in a second position, and to block substantially all air flow along the second flow path (48) in a first position.

2. The environmental control system (10) of claim 1, wherein the valve assembly (50) is arranged to block between about 45 and 85 percent of air flow along the first flow path (46) when in the second position.

3. The environmental control system (10) of claim 1 or 2, further comprising a manual wrenching feature (88) to allow manual repositioning of the valve element (62).

4. The environmental control system (10) of claim 1, 2 or 3, wherein the valve assembly (50) is positioned at a downstream location relative to the second flow path (48), such that actuation of the valve assembly (50) can restrict air flow from exiting the second flow path (48).

5. The environmental control system (10) of any preceding claim, wherein the valve assembly (50) is mounted to the manifold (54) and extends therein.

6. The environmental control system (10) of any preceding claim, wherein the valve assembly (50) includes a flapper valve (62).

## Patentansprüche

1. Umweltkontrollsystem (10) umfassend:
einen Stauluftkanal (20);
eine Kühlturbine (29) mit einem Kompressor (30) und eine Turbine(32);
einen Luft-Luft-Wärmetauscher (28), der mindestens teilweise im Stauluftkanal angeordnet ist (20);
einen ersten Durchflussweg (46), der durch den Wärmetauscher(28) führt und mit dem Kompressor (30) verbunden ist;
einen zweiten Durchflussweg (48), der konfiguriert ist, um selektiv zu öffnen, um den Luftstrom den ersten Durchflussweg (46)umgehen zu lassen und mit dem Kompressor zu kommunizieren (30); und
**gekennzeichnet durch**:
einen Verteiler (54), der am Wärmetauscher (28) montiert ist, wobei der zweite Durchflussweg (48) im Verteiler (54) eingebaut ist,
ein Ventil (50), das neben einer Verbindung zwischen dem ersten Durchflussweg (46) und dem zweiten Durchflussweg (48) angeordnet ist, so dass das Ventil (50) selektiv aktiviert werden kann, um den Luftstrom im ersten Durchflussweg (46) und im zweiten Durchflussweg (48) zu regulieren und das Ventil (50) so angeordnet ist, dass es in einer zweiten Position den Luftstrom im ersten Durchflussweg (46) teilweise oder vollständig blockiert und in einer ersten Position den Luftstrom im zweiten Durchflussweg (48) im Wesentlichen zur Gänze blockiert

2. Umweltkontrollsystem (10) nach Anspruch 1, wobei das Ventil (50) so angeordnet ist, dass es 45 bis 85 Prozent des Luftstroms im ersten Durchflussweg (46) blockiert, wenn es sich in der zweiten Stellung befindet.

3. Umweltkontrollsystem (10) nach Anspruch 1 oder 2, ferner umfassend: einen manuellen Schraubenschlüssel (88), um die manuelle Rückstellung des Ventilelements (62) zu ermöglichen.

4. Umweltkontrollsystem (10) nach Anspruch 1, 2 oder 3, wobei das Ventil (50) an nachgeordneter Stelle im Verhältnis zum zweiten Durchflussweg (48) angeordnet ist, so dass die Aktivierung des Ventils (50) den Luftstrom am Austritt aus dem zweiten Durchflussweg (48) hindert.

5. Umweltkontrollsystem (10) nach einer der vorhergehenden Ansprüche, wobei das Ventil (50) am Verteiler (54) montiert ist und in diesen hineinragt.

6. Umweltkontrollsystem (10) nach einem der vorhergehenden Ansprüche, wobei das Ventil(50) ein Klappenventil enthält (62).

## Revendications

1. Système de contrôle de l'environnement (10) comprenant :
un conduit d'air dynamique (20) ;
une machine à cycle d'air (29) comportant un compresseur (30) et une turbine (32) ;
un échangeur de chaleur air-air (28) positionné au moins partiellement dans le conduit d'air dynamique (20) ; un premier chemin d'écoulement (46) s'étendant à travers l'échangeur de chaleur (28) et communiquant avec le compresseur (30) ;
un second chemin d'écoulement (48) configuré pour être ouvert de façon sélective pour permettre au flux d'air de contourner le premier chemin d'écoulement (46) et pour communique avec le compresseur (30) ; et
**caractérisé par**
un collecteur (54) monté sur l'échangeur de chaleur (28), dans lequel le second chemin d'écoulement (48) est intégré dans le collecteur (54),
un ensemble de soupape (50) disposé adjacent à une jonction entre le premier chemin d'écoulement (46) et le second chemin d'écoulement (48), de sorte que l'ensemble de soupape (50) peut être actionné sélectivement pour réguler le flux d'air le long du premier chemin d'écoulement (46) et du second chemin d'écoulement (48), dans lequel l'ensemble de soupape (50) est agencé pour bloquer en partie ou pour bloquer quasiment tout l'écoulement d'air le long du premier chemin d'écoulement (46) dans une seconde position, et pour bloquer quasiment tout le flux d'air le long du second chemin d'écoulement (48) dans une première position.

2. Système de contrôle de l'environnement (10) selon la revendication 1, dans lequel l'ensemble de soupape (50) est agencé pour bloquer entre environ 45 et 85 pour cent du flux d'air le long du premier chemin d'écoulement (46) lorsqu'il est dans la seconde position.

3. Système de contrôle de l'environnement (10) selon la revendication 1 ou 2, comprenant en outre une caractéristique de serrage manuel (88) pour permettre le repositionnement manuel de l'élément de soupape (62).

4. Système de contrôle de l'environnement (10) selon la revendication 1, 2 ou 3, dans lequel l'ensemble de soupape (50) est positionné à un emplacement aval par rapport au second chemin d'écoulement (48), de sorte que l'actionnement de l'ensemble de soupape (50) peut empêcher le flux d'air de sortir du second chemin d'écoulement (48).

5. Système de contrôle de l'environnement (10) selon une quelconque revendication précédente, dans lequel l'ensemble de soupape (50) est monté sur le collecteur (54) et s'étend dans celui-ci.

6. Système de contrôle de l'environnement (10) selon une quelconque revendication précédente, dans lequel l'ensemble de soupape (50) comprend une soupape à clapet (62).
